# EUROPÄISCHE PATENTANMELDUNG

(11) **EP 0 901 921 A2**
(43) Veröffentlichungstag der Anmeldung: **17.03.1999**
(21) Anmeldenummer: 98116898.2
(22) Anmeldetag: 05.09.1998
(51) Int. Cl.: B60J 7/16

(54) **Hebedach für Kraftfahrzeuge**

(30) Priorität: 12.09.1997 DE 19741134
(71) Anmelder: Meritor Automotive GmbH, 60314 Frankfurt (DE)
(72) Erfinder: Hoffmann, Andreas, Dipl.-Ing. (FH), 64625 Bensheim (DE)
(74) Vertreter: Oppermann, Ewald, Dipl.-Ing.

(57) **Zusammenfassung**

Ein Hebedach für Kraftfahrzeuge mit einer durch einen Dachrahmen (2) eingefaßten Dachöffnung (3), der ein an seiner Vorderkante mit dem Dachrahmen (2) über Scharniere verbundener Deckel (4) zugeordnet ist. Der Deckel (4) ist über eine nahe seiner Hinterkante angeordnete Ausstellvorrichtung (6) schwenkbewegbar, die aus einem an den Deckel (4) angelenkten oberen Hebel (7) und einem an den Dachrahmen (2) angelenkten unteren Hebel (8) besteht. Die Hebel (7, 8) sind über ein Kniegelenk miteinander verbunden und im Bereich des Kniegelenks lamellenartig ausgebildet. Dabei greifen die Lamellen beider Hebel (7, 8) jeweils alternierend miteinander ein und sind durch eine am Kniegelenk angeordnete und dessen Bewegungen folgende Spannvorrichtung (11) mit aufhebbarem Kraftangriff auf das von den Lamellen beider Hebel (7, 8) gebildete Lamellenpaket reibschlüssig zusammendrückbar. Auf diese Weise kann der Deckel in jeder eingestellten Lüftungsposition auf einfache Weise zuverlässig festgelegt werden. Die Spannvorrichtung (11) übt ihren Kraftangriff auf das Lamellenpaket mittels einer Feder (13) aus. Die Federkraft ist über eine am Deckel (4) befestigte Betätigungsvorrichtung (23) über einen Bowdenzug (16) aufhebbar bzw. verringerbar, der die Betätigungsvorrichtung (23) mit der Spannvorrichtung (11) flexibel verbindet. Weiterhin ist eine in der Deckelschließstellung wirksame Verriegelungsvorrichtung (40) vorgesehen, die über teils rahmenseitige und teils deckelseitige Elemente verfügt und ebenfalls mittels der Betätigungsvorrichtung (23) bedient wird.

## Beschreibung

Die Erfindung bezieht sich auf ein Hebedach für Kraftfahrzeuge entsprechend dem Oberbegriff des Patentanspruchs 1.

Hebedächer dieser Ausbildung sind bekannt (DE 42 03 806 C1, Fig. 1). Es handelt sich hierbei um einfache Dachkonstruktionen mit üblicherweise aus einer Glasplatte gebildetem Deckel, der vorn am Dachrahmen scharniert ist und durch Anheben seiner Hinterkante mittels einer kniegelenkartigen Ausstellhebelvorrichtung in eine Lüftungsposition geschwenkt werden kann, in welcher zwischen der Deckelhinterkante und dem festen Fahrzeugdach ein Lüftungsspalt gebildet ist. Es ist wünschenswert, den Lüftungsspalt in seiner Höhe einstellen und den Deckel in jeder eingestellten Postition sicher festlegen zu können, um im Fahrbetrieb in jeder gewünschten Lüftungspostition des Deckels einen festen Deckelstand zu erzielen.

Bei einem bekannten Schiebedach (DE 22 54 962 B2), dessen Stahldeckel bei seiner Ausschwenkung in eine Lüftungsposition gleichzeitig noch teilweise über die hintere feste Dachfläche verschiebbar ist, ist der Lüftungsspalt einstellbar, weil der Deckel durch besondere Arretierungsmittel in jeder Deckelstellung arretierbar ist. Hierbei erfolgt die Ausstellung des Deckels jedoch mittels einfacher sowohl am Dachrahmen als auch am Deckel schwenkbar gelagerter Lenkhebel, deren rahmenseitige Enden durch eine Lagerwelle starr miteinander verbunden sind. An diese ortsfeste Lagerwelle, die an den Deckelbewegungen nicht teilnimmt, greifen die besonderen bremsscheibenartig ausgebildeten Arretierungsmittel an.

Der Erfindung liegt daher die Aufgabe zugrunde, bei einem einfachen Hebedach der im Oberbegriff angegebenen Ausbildung den Deckel in jeder eingestellten Lüftungsposition auf einfache Weise zuverlässig festlegen zu können.

Die gestellte Aufgabe wird erfindungsgemäß durch die Merkmale des Patentanspruchs 1 gelöst. Weiterbildungen der Erfindung gehen aus den Unteransprüchen hervor und sind nachstehend ebenfalls beschrieben.

Durch die erfindungsgemäße Ausbildung der Hebel und des Kniegelenks in Verbindung mit der am Kniegelenk angeordneten Spannvorrichtung ist eine Arretierung der so gebildeten Ausstellvorrichtung in jeder Deckelschwenkstellung bei sicherem Deckelstand möglich. Gleichzeitig wird durch das Lamellenpaket eine sehr gute Führung und Stabilität des Kniegelenks erreicht, so daß es für einen sicheren Deckelstand ausreichen kann, nur eine entsprechend ausgebildete Ausstellvorrichtung etwa in der Mitte der Deckelhinterkante anzubringen.

Vorzugsweise erfolgt gemäß Anspruch 2 der Kraftangriff auf das Lamellenpaket durch die Spannvorrichtung mittels Federkraft. Auf diese Weise ist sichergestellt, daß das Lamellenpaket in jeder gewünschten Deckelstellung zuverlässig reibschlüssig zusammengedrückt wird.

Die Spannvorrichtung ist vorteilhaft wie im Anspruch 3 angegeben ausgebildet. Die zur Erzeugung der Federkraft vorgesehene Schraubendruckfeder wirkt hierbei jeweils mittelbar einerseits über die Hülse mit einer Zugkraft auf die Kniegelenkachse und andererseits mit einer Druckkraft auf das Lamellenpaket ein, so daß das Lamellenpaket von beiden Seiten her zangenartig durch die Federkraft gepreßt wird. Auf diese Weise sind die einzelnen Lamellen reibschlüssig zusammengedrückt.

In Weiterführung des Erfindungsgedankens ist gemäß Anspruch 4 vorgesehen, daß der das Lamellenpaket mittels der Spannvorrichtung reibschlüssig zusammendrückende Kraftangriff durch Aufhebung der auf das Lamellenpaket einwirkenden Federkraft aufhebbar ist.

Hierbei ist die Anordnung entsprechend Anspruch 5 vorzugsweise so getroffen, daß zur Aufhebung der auf das Lamellenpaket einwirkenden Federkraft ein Bowdenzug vorgesehen ist, der einerseits zu der Spannvorrichtung und andererseits zu einer an der Unterseite des Deckels befestigten Drehgriff-Betätigungsvorrichtung geführt ist. Durch Betätigung des Drehgriffs wird über den Bowdenzug die Schraubendruckfeder zusammengedrückt, so daß der Federkraftangriff auf das Lamellenpaket aufgehoben bzw. verringert wird, wodurch das Kniegelenk für Deckelschwenkbewegungen beweglich wird. Da die Betätigungsvorrichtung bei Schwenkbewegungen dem Deckel folgt, während die Spannvorrichtung dabei an den Verlagerungen des Kniegelenks teilnimmt, sorgt der flexible Bowdenzug für eine problemlose Verbindung zwischen Betätigungsvorrichtung und der dem Kniegelenk zugeordneten Spannvorrichtung Die örtlich getrennte Anbringung der Ausstellvorrichtung mit zugeordneter Spannvorrichtung einerseits und der Betätigungsvorrichtung andererseits macht diese Ausbildung des Hebedachs besonders geeignet für ein geteiltes Hebedach, das aus zwei nebeneinanderliegenden Dachöffnungen besteht, die durch einen Mittelsteg voneinander getrennt sind und denen jeweils ein Deckel zugeordnet ist. Hierbei kann nämlich die Ausstellvorrichtung etwa in der Mitte der Hinterkante des Deckels angeordnet sein, während die Betätigungsvorrichtung an der hinteren inneren Ecke des Deckels angebracht sein kann. Die beiden Betätigungsvorrichtungen, die an den beiden Deckeln angebracht sind, liegen daher nebeneinander und können bequem mit einer Hand betätigt werden.

In weiterer Ausbildung der Erfindung ist entsprechend Anspruch 6 eine Verriegelungsvorrichtung für den Deckel vorgesehen, welche den Deckel in seiner Schließlage verriegelt. Dabei wird die Verriegelungsvorrichtung durch dieselbe Betätigungsvorrichtung bedient, die auch die Spannvorrichtung der Ausstellvorrichtung betätigt. Da die Betätigungsvorrichtung der Deckelbewegung folgt, sind einerseits an der Betätigungsvorrichtung und andererseits an der Verriegelungsvorrichtung Kupplungselemente vorgesehen, die beim Schließen des Deckels zwangsläufig in Eingriff kommen und beim Öffnen des Deckels entkuppelt werden.

Hierbei besteht gemäß Anspruch 6 die Verriegelungsvorrichtung aus einem am Dachrahmen verschiebbar geführten Riegel und einer diesem Riegel zugeordnete an der Deckelunterseite befestigte Riegeltasche. Für die Verschiebung des Riegels ist im Riegel eine quer zu seiner Schieberichtung verlaufende nach oben offene Führungsnut vorgesehen, der ein Führungszapfen zugeordnet ist, welcher am Ende des Schwenkhebels nach unten gerichtet angebracht ist. Wenn sich der Führungszapfen in der Führungsnut befindet, bewirken Betätigungen des Drehgriffs eine Verschiebung des Riegels in der einen oder anderen Richtung. Die Führungsnut am Riegel und der Führungszapfen am Schwenkhebel der Betätigungsvorrichtung sorgen auch für die Kupplung der Betätigungsvorrichtung mit der Verriegelungsvorrichtung und die Entkupplung dieser beiden Vorrichtungen. Dabei sind Riegel und Riegeltasche zum Zuziehen des geschlossenen Deckels bis in seine Endlage durch Anbringung entsprechender Schrägflächen ausgebildet.

Zweckmäßig ist vorgesehen, daß die beiden Endstellungen des Riegels lösbar verrastet sind, wie aus Anspruch 8 hervorgeht.

In Anspruch 9 ist angegeben, wie die Ausstellvorrichtung und die Spannvorrichtung ausgebildet sein können, um eine übermässige Pressung des Lamellenpakets in der letzten Schließphase des Deckels und dementsprechend auch in der ersten Öffnungsphase des Deckels auszuschließen, d.h. das Lamellenpaket in diesen Phasen nicht durch zu großen Reibschluß zu arretieren.

Durch die im Anspruch 10 angegebenen Merkmale läßt sich der Deckel leicht abnehmen, so daß den Fahrzeuginsassen die freie Dachöffnung zur Verfügung steht.

Weitere Einzelheiten der Erfindung werden nachfolgend anhand der ein Ausführungsbeispiel teilweise nur schematisch darstellenden Zeichnungen näher erläutert. Darin zeigt:
- Fig. 1: die teilweise aufgebrochene Draufsicht auf das Hebedach bei geschlossenem Deckel,
- Fig. 2: die aus Fig. 1 vergrößerte Draufsicht auf die Ausstellvorrichtung, die Spannvorrichtung und die Betätigungsvorrichtung,
- Fig. 3: den abgebrochenen Schnitt entlang der Linie III-III in Fig. 1,
- Fig. 4: eine Seitenansicht der Ausstellvorrichtung bei ausgeschwenktem Deckel und verriegeltem unteren Hebel,
- Fig. 5: die der Fig. 4 entsprechende Seitenansicht bei entriegeltem unteren Hebel,
- Fig. 6: eine Seitenansicht der Ausstellvorrichtung bei geschlossenem Deckel,
- Fig. 7: den abgebrochenen Schnitt durch die Betätigungsvorrichtung gemäß der Linie VII-VII in Fig. 1 bei nach unten geklapptem Drehgriff,
- Fig. 8: eine Seitenansicht der Betätigungsvorrichtung mit nach oben geklapptem Drehgriff,
- Fig. 9: einen Schnitt durch die Betätigungsvorrichtung entsprechend der Linie IX-IX in Fig. 7 in Ruhestellung der Betätigungsvorrichtung,
- Fig. 10: einen der Fig. 9 entsprechenden Schnitt, jedoch in Betätigungsstellung der Betätigungsvorrichtung,

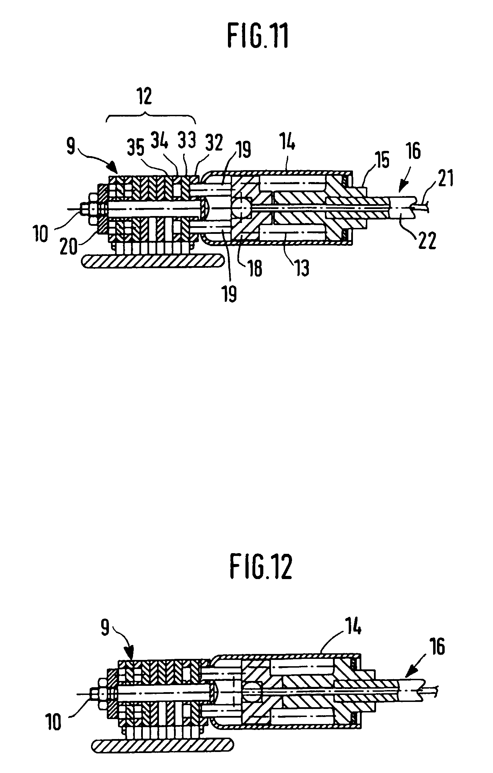

- Fig. 11: einen Längsschnitt durch das Lamellenpaket und die Spannvorrichtung bei reibschlüssig zusammengedrücktem Lamellenpaket,
- Fig. 12: einen der Fig. 11 entsprechenden Längsschnitt, jedoch bei von der Federkraft entlastetem Lamellenpaket für die Schwenkverstellung des Deckels,
- Fig. 13: einen Querschnitt durch das Lamellenpaket mit einer Flächenansicht der zweiten Lamelle,
- Fig. 14: eine abgebrochene Draufsicht auf das Ende des Riegels bei Verrastung in Riegelschließstellung,
- Fig. 15: die der Fig. 14 entsprechende Draufsicht, jedoch bei Verrastung des Riegels in Riegelöffnungsstellung,
- Fig. 16: einen abgebrochenen Schnitt durch ein vorderes Deckelscharnier entsprechend der Linie XVI-XVI in Fig. 1 bei geschlossenem Deckel,
- Fig. 17: den Schnitt entsprechend Fig. 16, jedoch bei ausgeschwenktem Deckel und
- Fig. 18: den Schnitt entsprechend den Fig. 16 und 17 bei zwecks Deckelausbau weiter nach oben verschwenktem Deckel.

Die Erfindung ist in den Zeichnungen am bevorzugten Beispiel der Anwendung auf ein zweigeteiltes Hebedach dargestellt und nachfolgend beschrieben, wobei der in Fahrtrichtung gesehen links befindliche Bereich des Hebedachs dargestellt ist. Der rechts befindliche Bereich ist spiegelbildlich ausgebildet. Beide Hebedachbereiche sind unabhängig voneinander bedienbar. Die Bedienung des Hebedachs erfolgt mit einer Hand und stufenlos. Zum Ausschwenken des Deckels ist dieser nach entsprechender und noch zu beschreibender Bedienung von Hand nach oben bis in die gewünschte Position zu verlagern. Der Schließvorgang wird durch das Gewicht des Deckels unterstützt.

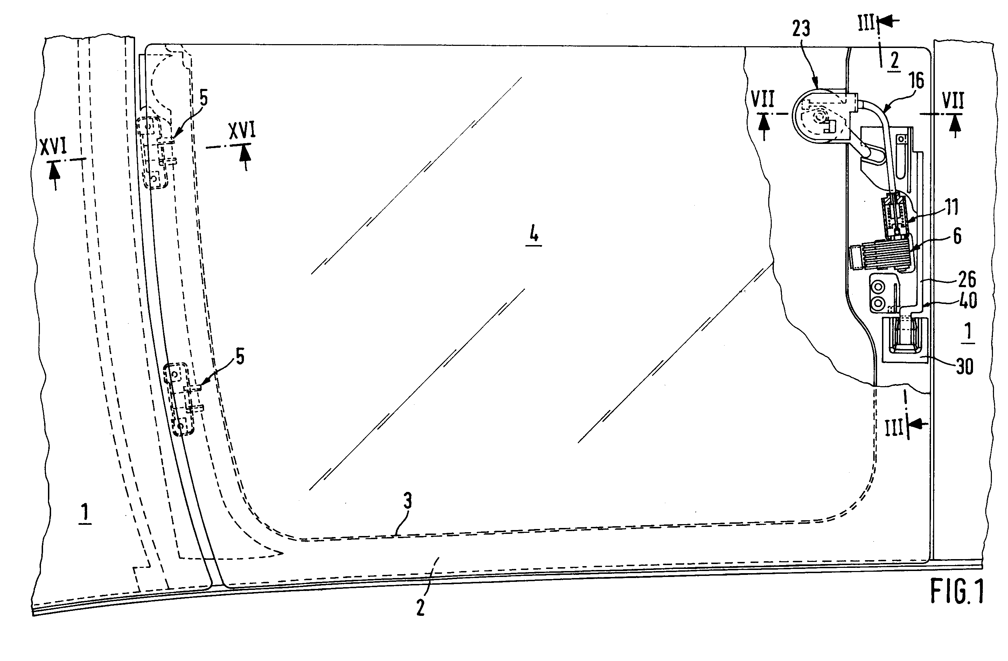

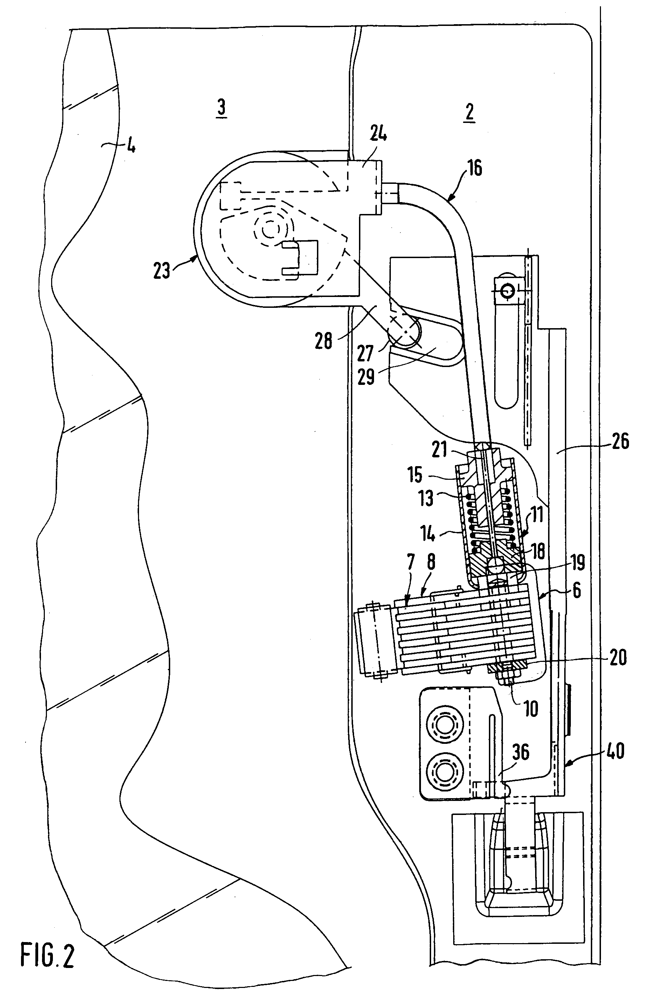

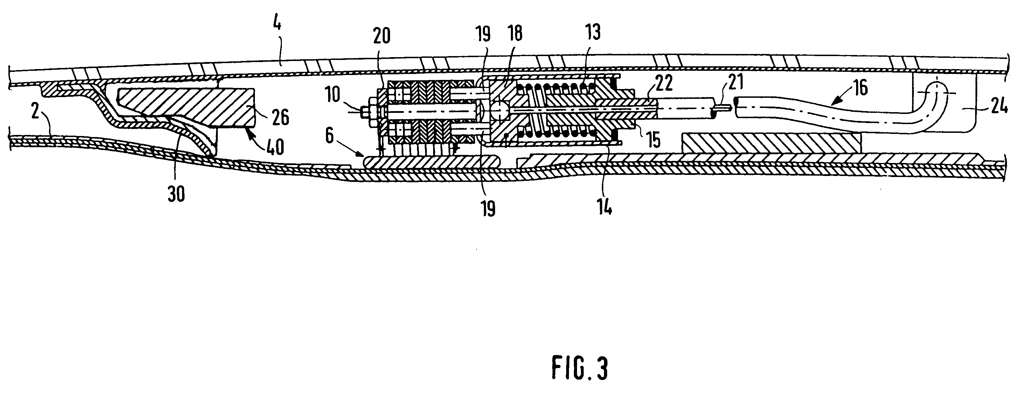

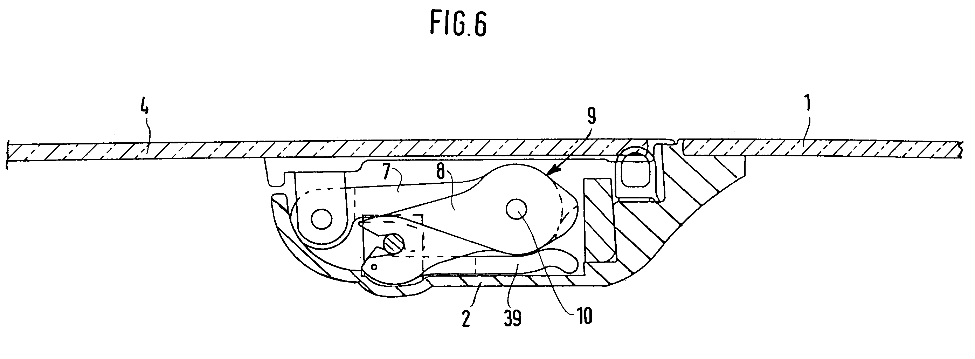

Die grundsätzliche Ausbildung des Hebedachs geht im wesentlichen aus Fig. 1 in Verbindung mit den Fig. 2 bis 6 hervor, auf die zunächst Bezug genommen wird. In der festen Dachfläche 1 des Fahrzeugdachs befindet sich die durch einen Dachrahmen 2 eingefaßte Dachöffnung 3. Der Dachöffnung 3 ist ein Deckel 4 zugeordnet, der an seiner Vorderkante mit dem Dachrahmen 2 über zwei Scharniere 5 verbunden ist. Nahe der Hinterkante des Deckels 4 ist eine allgemein mit der Bezugszahl 6 bezeichnete Ausstellvorrichtung angeordnet, welche Schwenkbewegungen des Deckels erlaubt. Die Ausstellvorrichtung 6 besteht aus einem an den Deckel 4 angelenkten oberen Hebel 7, einem an den Dachrahmen 2 angelenkten unteren Hebel 8 und einem die Hebel 7 und 8 schwenkbar miteinander verbindenden Kniegelenk 9 mit Kniegelenkachse 10. Die Hebel 7 und 8 sind im Bereich des Kniegelenks 9 lamellenartig ausgebildet, wobei die Lamellen beider Hebel 7 und 8 jeweils alternierend miteinander eingreifend angeordnet sind. Am Kniegelenk 9 ist eine allgemein mit der Bezugszahl 11 bezeichnete Spannvorrichtung angeordnet, welche den Bewegungen des Kniegelenks folgt. Diese Spannvorrichtung 11 wirkt mit aufhebbarem Kraftangriff auf das von den Lamellen beider Hebel 7 und 8 gebildete allgemein mit der Bezugszahl 12 bezeichnete Lamellenpaket ein, wodurch die Lamellen reibschlüssig zusammendrückbar sind. Hierbei erfolgt der Kraftangriff auf das Lamellenpaket durch die Spannvorrichtung 11 mittels Federkraft, wie nachfolgend noch näher beschrieben ist.

Das reibschlüssige Zusammendrücken der Lamellen des Lamellenpakets 12 besorgt eine kräftige Schraubendruckfeder 13, die sich in einer Hülse 14 befindet, welche koaxial mit der Kniegelenkachse 10 angeordnet ist. Die Schraubendruckfeder 13 stützt sich an einem Stopfen 15 ab, welcher in das freie Ende der Hülse 14 eingepreßt ist und gleichzeitig einen Bowdenzug 16 führt. Die Hülse 14 und die Kniegelenkachse 10 des Lamellenpakets 12 sind fest miteinander verbunden. Im lamellenseitigen Boden 17 der Hülse 14 befindet sich ein nachfolgend noch näher zu beschreibendes Lochbild, durch welche ein durch die Feder belastetes Druckstück 18 mit vier Zapfen 19 hindurchgreift und das Lamellenpaket 12 preßt. Am anderen Ende der Kniegelenkachse 10 befindet sich eine Scheibe 20, welche fest mit der Kniegelenkachse 10 verschraubt ist und dem Lamellenpaket 12 als Kraftwiderlager anliegt. Durch die Reibung zwischen den einzelnen Lamellen wird die Bewegung des Kniegelenks gehemmt und arretiert, wobei der Deckel 4 im ausgestellten Zustand verharrt.

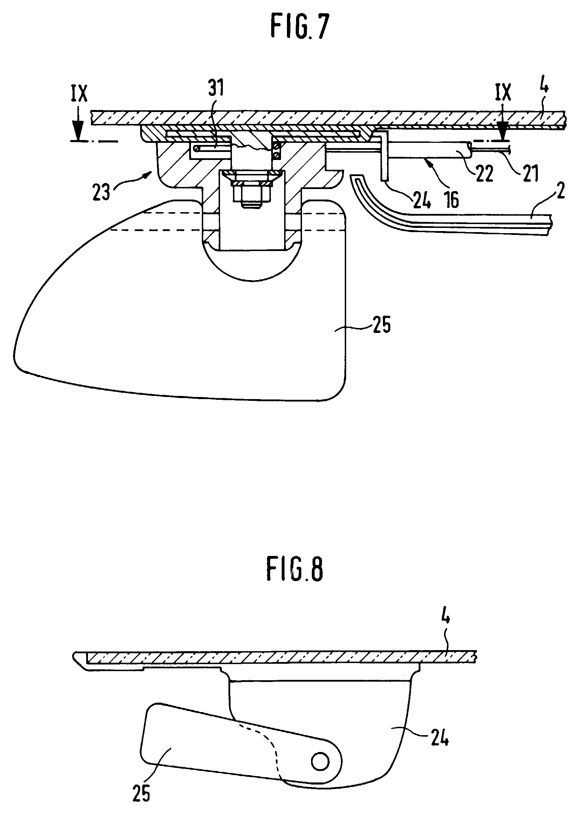

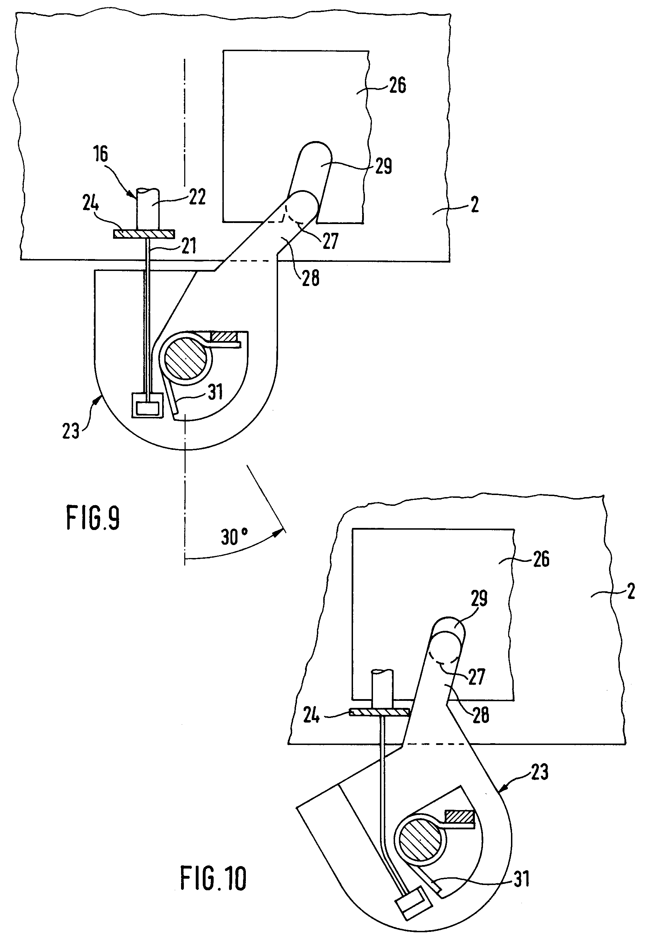

Zur Verstellung der Deckelausstellhöhe wird die Federkraft über den Bowdenzug 16 von den Lamellen des Lamellenpakets 12 genommen, wodurch das Kniegelenk bewegbar wird. Die Seele 21 des Bowdenzugs 16 greift an das Druckstück 18 an und dessen Hülle 22 an den Stopfen 15. Das freie Ende des Bowdenzugs 16 ist zu einer an der Unterseite des Deckels 4 befestigten Drehgriff-Betätigungsvorrichtung 23 geführt, an deren Gehäuse 24 die Hülle 22 und an deren Drehgriff 25 die Seele 21 angreift, wie die Fig. 9 und 10 verdeutlichen. Fig. 7 zeigt, daß sich der Drehgriff 25 für die Bedienung nach unten klappen läßt, sonst aber in der aus Fig. 8 ersichtlichen hochgeklappten Position am Deckel 4 liegt.

Die Drehgriff-Betätigungsvorrichtung 23 hat auch eine den Dekkel verriegelnde und entriegelnde Funktion. Hierfür ist ein Riegel 26 vorgesehen, welcher an dem Dachrahmen 2 verschiebbar geführt ist und von einem Führungszapfen hin- und hergeschoben wird, welcher am Ende eines von dem Drehgriff 25 betätigten Schwenkhebels 28 nach unten gerichtet angeordnet ist. Der Führungszapfen 27 greift zu diesem Zweck in eine nach oben offene Führungsnut 29 des Riegels 26 ein. Damit der Führungszapfen 27 beim Schließen des Deckels 4 in die Führungsnut 29 hineinfindet, kann der Bediener den Deckel 4 erst dann bewegen, wenn der Drehgriff 25 in einer Position ist, in welcher sich der Führungszapfen 27 über der Führungsnut 29 befindet. Dies kann durch entsprechende Anschläge in der Betätigungsvorrichtung sichergestellt werden.

Um den Deckel 4 zu öffenen, muß der Drehgriff 25 vom Bediener aus gesehen im Uhrzeigersinn gedreht werden. Hierbei wird zum einen der Riegel 26 aus der an dem Deckel 4 befestigten Riegeltasche 30 herausgezogen, wodurch der Deckel 4 entriegelt wird. Zum anderen wird bei dieser Drehung des Drehgriffs 25 der Bowdenzug 16 betätigt, wie Fig. 10 verdeutlicht, wodurch das Lamellenpaket 12 von der Federkraft entlastet wird. Hierdurch wird die Ausstellvorrichtung 6 beweglich, und der Deckel 4 kann nach oben ausgeschwenkt werden. Wird der Drehgriff 25 losgelassen, belastet die Schraubendruckfeder 13 wieder das Lamellenpaket 12, so daß durch die entstehende Flächenpressung und die Reibungskräfte zwischen den Lamellen der Deckel 4 in der gewünschten Position stehenbleibt. Der Drehgriff 25 wird durch eine aus den Fig. 9 und 10 ersichtliche Schenkelfeder 31 wieder in seine Ruhestellung zurückbewegt.

Soll der ausgeschwenkte Deckel 4 geschlossen werden, wird der Drehgriff 25 wiederum vom Bediener aus gesehen im Uhrzeigersinn gedreht, wodurch der Bowdenzug 16 wiederum das Lamellenpaket von der Federkraft entlastet, so daß der Deckel 4 beweglich wird und geschlossen werden kann. Zum Verriegeln des Deckels 4 wird nunmehr der Drehgriff 25 im vom Bediener aus gesehen Gegenuhrzeigersinn gedreht, wodurch der Riegel 26 über den Eingriff des Führungszapfens 27 mit der Führungsnut 29 wieder in die an dem Deckel 4 befestigte Riegeltasche 30 hineingeschoben wird.

Hierbei tritt folgende Besonderheit auf: Da die Bediendrehrichtung für den Bowdenzug im Uhrzeigersinn und die Bedienrichtung für die Verriegelung im Gegenuhrzeigersinn erfolgt, also gegenläufig sind, ist der Bowdenzug 16 bereits wieder entlastet und das Lamellenpaket 12 der Ausstellvorrichtung 6 durch Reibung arretiert, wenn der Riegel 26 den Deckel 4 verriegelt. Da jedoch der Deckel 4 noch um einen weiteren Weg von etwa 6 mm nach unten zugezogen werden muß, darf das Lamellenpaket 12 während dieser letzten Phase des Schließvorgangs nicht durch Reibung arretiert sein. Um während dieser letzten Schließphase den Reibungsschluß wenigstens zu verringern, ist folgendes vorgesehen.

Die am Druckstück 18 achsparallel zur Kniegelenkachse 10 befestigten gleich langen Zapfen drücken nicht auf die erste Lamelle 32 des Lamellenpakets 12, die zum unteren Hebel 8 gehört, sondern auf die zweite Lamelle 33, die zum oberen Hebel 7 gehört. Auch die dritte Lamelle 34, welche wiederum zum unteren Hebel 8 gehört, hat das Lochbild der ersten Lamelle 32. Kommt nun das Kniegelenk 9 in die Position, wo der Riegel 26 im Zusammenwirken mit der Riegeltasche 33 den Deckel 4 endgültig zuziehen soll, kommt ein weiteres in der zweiten Lamelle 33 vorhandenes Lochbild zur Deckung mit dem Lochbild in der ersten Lamelle 32 und der dritten Lamelle 34, so daß die Zapfen 19 jetzt weiter in das Lamellenpaket eindringen können, bis sie auf die vierte Lamelle 35 auftreffen, die kein Lochbild besitzt. Durch diesen Weg des Druckstücks 18 bzw. der daran angebrachten Zapfen 19 wird die Schraubendruckfeder 13 so weit entspannt, daß die Lamellen des Lamellenpakets 12 mit der über die Betätigungsvorrichtung 23 eingeleiteten Handkraft gegeneinander verdreht werden können, so daß der Riegel 26 den Deckel 4 endgültig zuziehen kann, ohne einen erheblichen Reibungsiwderstand des Kniegelenks 9 überwinden zu müssen.

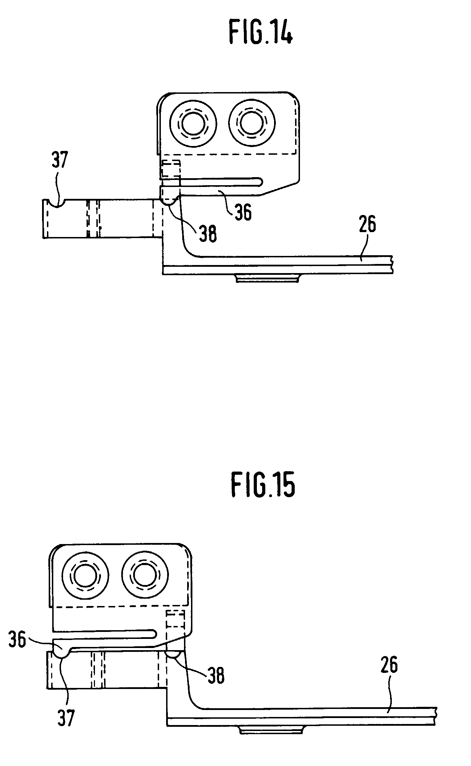

Die Endstellungen des Riegels 26 sind durch die in den Fig. 14 und 15 dargestellte Verrastung gesichert. Hierbei greift ein am Dachrahmen 2 befestigtes federndes Rastelement 36 jeweils in eine entsprechende Rastvertiefung 37 bzw. 38 am Ende des Riegels 26 ein. Die Verrastung ist durch den Verschiebekraftangriff an den Riegel 26 aufhebbar.

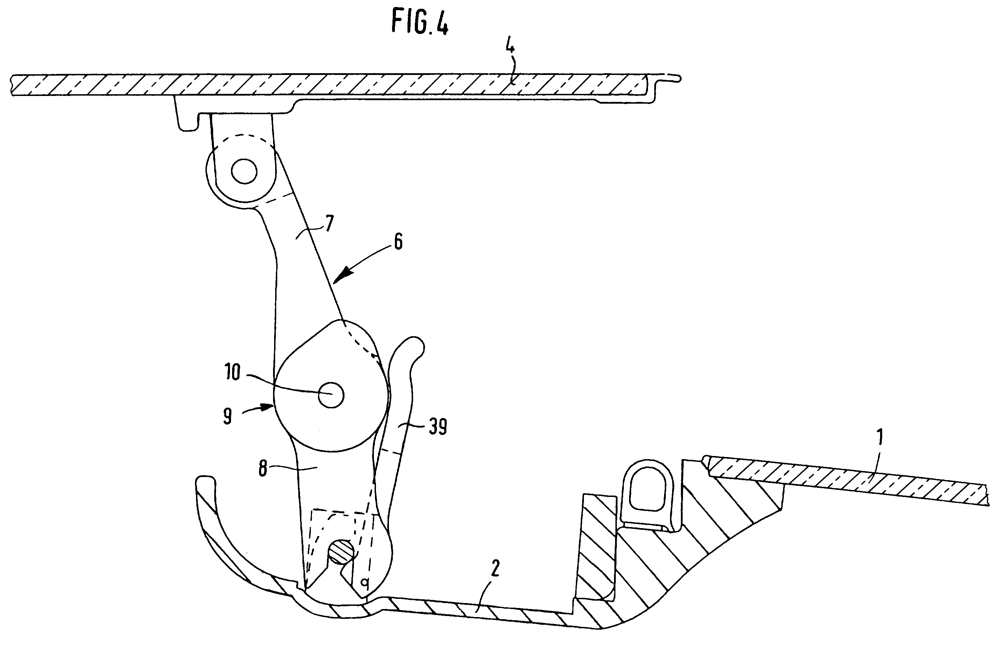

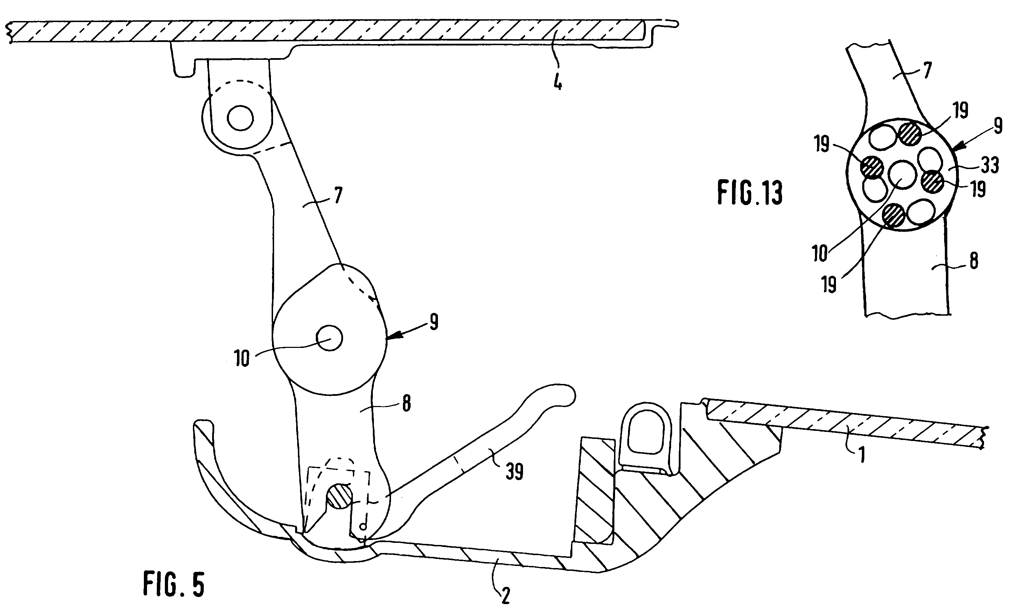

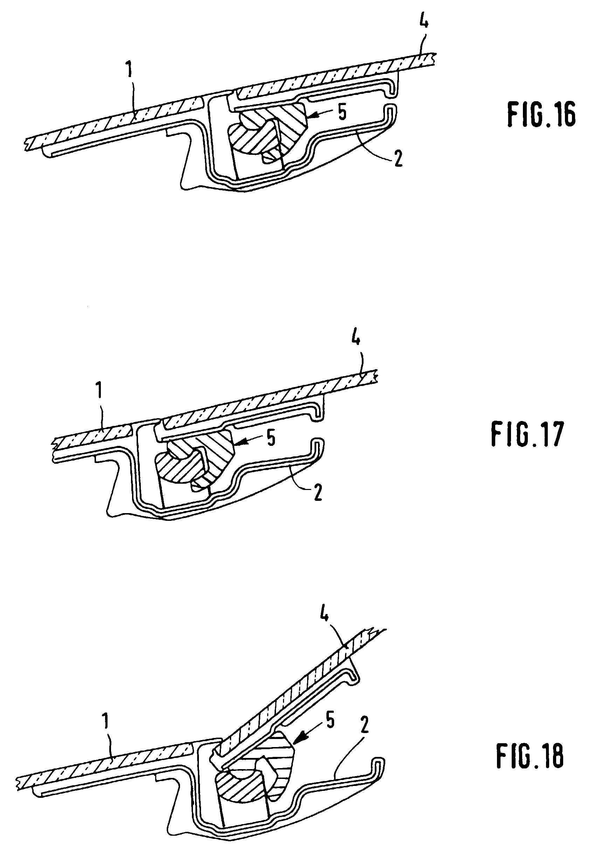

Zum Ausbau des Deckels wird die Ausstellvorrichtung 6 vom Dachrahmen 2 gelöst, wie in den Fig. 4 und 5 dargestellt ist. Zu diesem Zweck wird ein Rasthaken 39 verschwenkt, wodurch die untere Anlenkstelle der Ausstellvorrichtung 6 freigegeben wird. Dann kann der Deckel 4 an seiner Hinterkante hochgehoben werden, wodurch sich die Scharnierelemente der Scharniere 5 voneinander lösen lassen, wie die Fig. 16 bis 18 verdeutlichen.

Bezüglich der Fig. 13 ist noch darauf hinzuweisen, daß das Lochbild in der zweiten Lamelle 33 aus Langlöchern besteht, so daß der obere Hebel 7 und der untere Hebel 8 der Ausstellvorrichtung 6 in der letzten Phase der Deckelschließbewegung sich noch geringfügig gegeneinander verschwenken lassen.

Vorgeschlagen wird ein Hebedach für Kraftfahrzeuge mit einer durch einen Dachrahmen eingefaßten Dachöffnung, der ein an seiner Vorderkante mit dem Dachrahmen über Scharniere verbundener Deckel zugeordnet ist. Der Deckel ist über eine nahe seiner Hinterkante angeordnete Ausstellvorrichtung schwenkbewegbar, die aus einem an den Deckel angelenkten oberen Hebel und einem an den Dachrahmen angelenkten unteren Hebel besteht. Die Hebel sind über ein Kniegelenk miteinander verbunden und im Bereich des Kniegelenks lamellenartig ausgebildet. Dabei greifen die Lamellen beider Hebel jeweils alternierend miteinander ein und sind durch eine am Kniegelenk angeordnete und dessen Bewegungen folgende Spannvorrichtung mit aufhebbarem Kraftangriff auf das von den Lamellen beider Hebel gebildete Lamellenpaket reibschlüssig zusammendrückbar. Auf diese Weise kann der Deckel in jeder eingestellten Lüftungsposition auf einfache Weise zuverlässig festgelegt werden. Die Spannvorrichtung übt ihren Kraftangriff auf das Lamellenpaket mittels einer Feder aus. Die Federkraft ist über eine am Deckel befestigte Betätigungsvorrichtung über einen Bowdenzug aufhebbar bzw. verringerbar, der die Betätigungsvorrichtung mit der Spannvorrichtung flexibel verbindet. Weiterhin ist eine in der Deckelschließstellung wirksame Verriegelungsvorrichtung vorgesehen, die über teils rahmenseitige und teils deckelseitige Elemente verfügt und ebenfalls mittels der Betätigungsvorrichtung bedient wird.

## Patentansprüche

1. Hebedach für Kraftfahrzeuge mit einer durch einen Dachrahmen (2) eingefaßten Dachöffnung (3), der ein an seiner Vorderkante mit dem Dachrahmen (2) über Scharniere (5) verbundener Deckel (4) zugeordnet ist, welcher über eine nahe seiner Hinterkante angeordnete Ausstellvorrichtung (6) schwenkbewegbar ist, die aus einem an den Deckel (4) angelenkten oberen Hebel (7) und einem an den Dachrahmen (2) angelenkten unteren Hebel (8) besteht, welche Hebel (7, 8) über ein Kniegelenk (9) miteinander verbunden sind, **dadurch gekennzeichnet**, daß die Hebel (7, 8) im Bereich des Kniegelenks (9) lamellenartig ausgebildet sind, wobei die Lamellen beider Hebel (7, 8) jeweils alternierend miteinander eingreifend angeordnet und durch eine am Kniegelenk (9) angeordnete und dessen Bewegungen folgende Spannvorrichtung (11) mit aufhebbarem Kraftangriff auf das von den Lamellen beider Hebel (7, 8) gebildete Lamellenpaket (12) reibschlüssig zusammendrückbar sind.

2. Hebedach nach Anspruch 1, **dadurch gekennzeichnet**, daß der Kraftangriff auf das Lamellenpaket (12) durch die Spannvorrichtung (11) mittels Federkraft erfolgt.

3. Hebedach nach Anspruch 1 oder 2, **dadurch gekennzeichnet**, daß an einer das Lamellenpaket (12) durchsetzenden Kniegelenkachse (10) an einer Seite des Lamellenpakets (12) eine zylindrische Hülse (14) koaxial befestigt ist, in welcher sich eine Schraubendruckfeder (13) befindet, die sich einerseits an einem am freien Ende der Hülse (14) befestigten Stopfen (15) und andererseits an einem in der Hülse (14) verschiebbaren Druckstück (18) abstützt, das sich seinerseits pressend am Lamellenpaket (12) abstützt, wobei an der anderen Seite des Lamellenpakets (12) auf der Kniegelenkachse (10) eine daran befestigte und dem Lamellenpaket (12) als Kraftwiderlager anliegende Scheibe (20) sitzt.

4. Hebedach nach einem der Ansprüche 1 bis 3, **dadurch gekennzeichnet**, daß der das Lamellenpaket (12) mittels der Spannvorrichtung (11) reibschlüssig zusammendrückende Kraftangriff durch Aufhebung der auf das Lamellenpaket (12) einwirkenden Federkraft aufhebbar ist.

5. Hebedach nach Anspruch 3 oder 4, **dadurch gekennzeichnet**, daß zur Aufhebung der auf das Lamellenpaket (12) einwirkenden Federkraft ein Bowdenzug (26) vorgesehen ist, dessen Seele (21) an das Druckstück (18) und dessen Hülle (22) an den Stopfen (15) angreift, und daß das freie Ende des Bowdenzugs (16) zu einer an der Unterseite des Deckels (4) befestigten Drehgriff-Betätigungsvorrichtung (23) geführt ist, an deren Gehäuse (24) die Hülle (22) und an deren Drehgriff (25) die Seele (21) angreift.

6. Hebedach nach Anspruch 5, **dadurch gekennzeichnet**, daß die zur Aufhebung des Kraftangriffs auf das Lamellenpaket (12) der Ausstellvorrichtung (6) vorgesehene an der Deckelunterseite befestigte Drehgriff-Betätigungsvorrichtung (23) mittels eines ebenfalls durch den Drehgriff (25) der Betätigungsvorrichtung (23) betätigten Schwenkhebels (28) in der Deckelschließstellung mit einer Verriegelungsvorrichtung (40) für den Deckel (4) derart gekuppelt ist, daß der Deckel (4) über den Drehgriff (25) verriegel- und entriegelbar ist, wobei die Kupplung zwischen dem Schwenkhebel (28) und der Verriegelungsvorrichtung (40) bei Ausschwenkbewegungen des Deckels (4) zwangsläufig aufgehoben ist.

7. Hebedach nach Anspruch 6, **dadurch gekennzeichnet**, daß die Verriegelungsvorrichtung (40) einen am Dachrahmen (2) verschiebbar geführten Riegel (26) und eine diesem zugeordnete an der Unterseite des Deckels (4) befestigte Riegeltasche (30) umfaßt, wobei im Riegel (26) eine zu seiner Schieberichtung quer verlaufende nach oben offene Führungsnut (29) vorgesehen ist, der ein Führungszapfen (27) zugeordnet ist, welcher am Ende des Schwenkhebels (28) nach unten gerichtet angebracht ist, und wobei Riegel (26) und Riegeltasche (30) zum Zuziehen des geschlossenen Deckels (4) bis in seine Endlage ausgebildet sind.

8. Hebedach nach Anspruch 7, **dadurch gekennzeichnet**, daß die beiden Endstellungen des Riegels (26) durch eine bei Verschiebekraftangriff an den Riegel (26) aufhebbare Verrastung (36, 37, 38) gesichert sind.

9. Hebedach nach einem der Ansprüche 3 bis 8, **dadurch gekennzeichnet**, daß am Druckstück (18) achsparallel zur Kniegelenkachse (10) gleichlange Zapfen (19) befestigt sind, die durch entsprechende Lochungen im Boden der Hülse (24) hindurchgeführt sind und sich mit ihren freien Enden am Lamellenpaket (12) abstützen, wobei die erste der Spannvorrichtung (11) benachbarte zum unteren Hebel (8) gehörende Lamelle (32) und die dritte zum unteren Hebel (8) gehörende Lamelle (34) ein den Zapfen (19) und ihrer umfänglichen Verteilung an der Kniegelenkachse (10) genau entsprechende Lochung aufweisen, während die zweite zum oberen Hebel (7) gehörende Lamelle (33) eine davon abweichende Lochung aufweist, die den Durchtritt der unter der Einwirkung der Schraubendruckfeder (13) stehenden Zapfen (19) nur dann erlauben, wenn der Riegel den geschlossenen Deckel (4) zuzieht, wobei die Löcher der Lochung in der zweiten Lamelle (33) als Langlöcher ausgebildet sind.

10. Hebedach nach einem der Ansprüche 1 bis 9, **dadurch gekennzeichnet**, daß der Deckel (4) durch Entriegeln des unteren Hebels (8) von seiner rahmenseitigen Anlenkstelle und durch Aushängen der vorderen Scharniere (5) abnehmbar ist.
